# FASCICULE DE BREVET EUROPEEN

(11) **EP 3 139 487 B1**
(45) Date de publication et mention de la délivrance du brevet: **24.06.2020**
(21) Numéro de dépôt: 16185618.2
(22) Date de dépôt: 25.08.2016
(51) Int. Cl.: H02P 3/22, H02P 6/24

(54) **SYSTÈME DE FREINAGE ET MÉTHODE DE FREINAGE D'UN MOTEUR ÉLECTRIQUE**
BREMSSYSTEM UND -METHODE EINES ELEKTROMOTORS
BRAKING SYSTEM AND METHOD FOR BRAKING AN ELECTRIC MOTOR

(30) Priorité: 25.08.2015 FR 1557921
(43) Date de publication de la demande: 08.03.2017
(73) Titulaire: Selni, 58000 Nevers (FR)
(72) Inventeur: FLOCCO, Bruno, 60300 SENLIS (FR); VIDAL, Philippe, 03340 NEUILLY-LE-REAL (FR)
(74) Mandataire: Gevers & Orès

(56) Documents cités:
- EP-A1- 0 920 119
- DE-A1-102004 014 986
- DE-A1-102012 023 263
- US-A1- 2005 088 047
- US-A1- 2010 141 188

## Description

### DOMAINE TECHNIQUE

L 'invention concerne un système de freinage permettant de freiner un moteur électrique.

### ART ANTERIEUR

L'art antérieur comprend notamment les documents EP-A1-0 920 119 et DE-A1-10 2004 014986. EP-A1-0 920 119 décrit un système de freinage pour un moteur électrique et DE-A1-10 2004 014986 décrit des moyens de verrouillage d'un moteur électrique.

Les moteurs électriques sont bien connus. Ils permettent par exemple d'utiliser de l'énergie électrique pour faire tourner un arbre moteur qui lui-même peut entraîner par exemple des roues motrices d'une voiture, un élément de fermeture (un volet par exemple). En général, un moteur électrique comprend un stator fixe ayant un évidement central et un rotor qui peut tourner à l'intérieur de l'évidement central du stator. Il existe différentes façons de faire tourner le rotor à l'intérieur du stator. Une méthode consiste à utiliser un rotor comprenant un aimant et à imposer un champ magnétique tournant à l'intérieur de l'évidement central du stator. L'aimant du rotor subit alors une force qui tend à l'aligner sur le champ magnétique tournant du stator. Au final, le rotor tourne. Pour imposer le champ magnétique tournant du stator, une méthode consiste à utiliser des bobines (ou électro-aimants) disposées le long du stator. En imposant un courant électrique spécifique dans chacune des bobines, il est possible d'obtenir un champ magnétique tournant dans l'évidement central du stator. En général, on peut contrôler le couple de sortie du moteur électrique et la vitesse de rotation du rotor avec l'intensité et la fréquence des courants traversant les bobines. En particulier, en coupant l'alimentation en courant des bobines, le rotor s'arrête.

Néanmoins, après avoir cessé l'alimentation des bobines du stator, le rotor continue à tourner pendant un certain temps à cause de son inertie. Des systèmes de freinage ont donc été développés pour pouvoir freiner le stator car il est souvent désiré voire nécessaire d'avoir un contrôle sur la fin de rotation du rotor. Dans la plupart des situations, il n'est en effet pas possible d'attendre que le rotor s'arrête de lui-même une fois que l'alimentation des bobines est coupée.

Les systèmes de freinage connus présentent certains inconvénients. Pour beaucoup d'entre eux, il faut prévoir des éléments additionnels spécifiques tels que par exemple des aimants permanents spécialement dédicacés à une fonction de frein. Cela augmente les coûts et rend la fabrication d'un moteur électrique muni d'un tel système de freinage plus longue et plus compliquée. Cela augment aussi l'encombrement de tels moteurs électriques. D'autre part, les systèmes de freinage connus ne sont en général pas suffisamment efficaces pour permettre un arrêt rapide du rotor.

### RÉSUMÉ DE L'INVENTION

Selon un premier aspect, les inventeurs proposent un système de freinage pour freiner un moteur électrique qui est simple à mettre en œuvre et qui permet d'avoir un pouvoir de freinage additionnel par rapport aux systèmes de freinage connus.

A cette fin, les inventeurs proposent le moteur électrique suivant : moteur électrique tubulaire comprenant un rotor apte à tourner et comprenant au moins un aimant, un stator portant une pluralité de bobines et présentant un évidement central pour permettre une rotation dudit rotor à l'intérieur dudit stator et un système de freinage dudit moteur électrique ledit moteur est remarquable en ce que ledit système de freinage comprend des moyens de freinage magnétique constitués d'aimants permanents supplémentaires solidaires d'une partie du rotor et couplés magnétiquement à des aimants permanents solidaires d'une partie du stator, des moyens de commutation couplés à ladite pluralité de bobines et des moyens de commande conçus pour commander lesdits moyens de commutation pour mettre en court-circuit chacune des bobines de ladite pluralité de bobines.

Le système de freinage de l'invention est simple à mettre en œuvre. Il ne nécessite que des moyens de commutation et des moyens de commande. Ces moyens de commande peuvent être les mêmes que ceux qui contrôlent en général le courant circulant dans les bobines du stator. Le nombre d'éléments spécifiquement dédicacés au système de freinage de l'invention est donc fortement réduit. Cela simplifie l'implémentation du système de freinage et limite les coûts associés.

Le système de freinage de l'invention permet d'avoir un pouvoir de freinage additionnel par rapport aux systèmes de freinage connus. Quand on décide de freiner le moteur électrique, les moyens de commande envoient un signal aux moyens de commutation pour mettre chacune des bobines du stator en court-circuit. Ce terme est connu d'un homme du métier. Une bobine comprend en général deux bornes : une borne d'entrée du courant et une borne de sortie du courant lorsque la bobine est alimentée en courant. Mettre en court-circuit une bobine signifie connecter électriquement les deux dites bornes avec une résistance électrique aussi petite que possible. Une fois le système de freinage de l'invention activé, chaque bobine est court-circuitée. Quand on décide d'arrêter le moteur électrique, le rotor tourne en général. Chaque bobine subit donc une variation de flux magnétique induite par la rotation du rotor. Chaque bobine s'oppose à cette variation en créant un contre flux magnétique. Dans chaque bobine, la force électromotrice induite par la variation de flux magnétique crée un courant dans la bobine et donc un flux magnétique. Ce contre flux magnétique peut être important avec le système de freinage de l'invention puisque les bobines sont court-circuitées sur elles-mêmes (la force électromotrice induite crée un courant qui peut être important dans chaque bobine court-circuitée, et donc un flux magnétique). Les contre flux créés par les bobines court-circuitées freinent la rotation du rotor qui comprend un aimant.

Ce couplage magnétique permettent de fournir un freinage supplémentaire et/ou d'aider à maintenir le rotor à l'arrêt lorsque les bobines ne sont pas alimentées électriquement. Lorsque l'énergie électrique fournie aux bobines est suffisante, le couple moteur du moteur électrique est supérieur au couple de freinage fourni par le système de freinage magnétique, ce qui permet la rotation du rotor. Au contraire, lorsque l'énergie électrique fournie aux bobines est insuffisante, le couple moteur est inférieur au couple de freinage magnétique, permettant le ralentissement du rotor lorsque ce dernier tourne. En utilisant en outre le système de freinage selon l'invention, le freinage est d'autant plus efficace.

De préférence, le moteur électrique est un moteur électrique sans balais souvent appelé brushless.

De préférence, l'aimant du rotor est un aimant permanent. De préférence, les moyens de commande sont programmés pour commander les moyens de commutation pour mettre chaque bobine en court-circuit.

De préférences, les moyens de commande comprennent un contrôleur. De préférence, ce contrôleur est un microcontrôleur.

De préférence, les moyens de commutation comprennent un interrupteur. Selon une version encore préférée, les moyens de commutation comprennent un ensemble de plusieurs interrupteurs. D'autres moyens de commutation connus de l'homme du métier peuvent être utilisés.

De préférence, ladite pluralité de bobines comprend des bobines aptes à être alimentées par des courants déphasés. Selon cette variante préférée, il y a donc différentes bobines alimentées par différentes phases ou par des courants déphasés. De préférence, il y a trois phases différentes décalées chacune de 120°. Il y alors de préférence, trois bobines ou un multiple entier de trois bobines. Dans ce mode de réalisation préféré, les différentes bobines alimentées par les différentes phases sont mises en court-circuit quand il est souhaité de freiner le moteur électrique.

De préférence, le rotor est constitué d'un cylindre en plastoferrite aimanté, emmanché et collé sur un arbre.

Par ailleurs, le stator est constitué d'une pluralité de couronnes assemblées, chaque couronne comportant un évidement central pour le passage du rotor et une pluralité de dents radiales en forme de T s'étendant vers le centre de ladite couronne, lesdites dents radiales recevant respectivement les bobines.

### DESCRIPTION SOMMAIRE DES FIGURES

D'autres avantages et caractéristiques ressortiront mieux de la description qui va suivre de plusieurs variantes d'exécution, données à titre d'exemple non limitatifs, en référence aux dessins annexés dans lesquels :
- la figure 1 montre une maison avec une porte munie d'un élément de fermeture ;
- la figure 2 montre un exemple de moteur électrique;
- la figure 3 montre une vue en coupe d'un exemple de moteur électrique selon l'invention ;
- la figure 4 montre un exemple de moyens de commutation et de moyens de commande du système de freinage de l'invention en combinaison avec d'autres éléments qui permettent de contrôler le courant s'écoulant dans des bobines d'un stator.

Les différentes figures ne sont pas nécessairement à l'échelle.

### DESCRIPTION DÉTAILLÉE DE MODES DE RÉALISATION PRÉFÉRÉS

Selon un premier aspect, l'invention concerne un système de freinage pour freiner un moteur électrique 2. Ce moteur électrique 2 peut être utilisé pour entraîner différents éléments tels que par exemple : les roues d'une voiture, une lame d'un appareil électroménager, un élément de fermeture 1. Des exemples d'éléments de fermeture 1 sont : un store, un volet, une rideau. L'invention est détaillée lorsque le moteur électrique 2 est utilisé pour entraîner un élément de fermeture 1. Un homme du métier comprendra sans difficulté que l'invention peut être utilisée lorsque le moteur électrique 2 est employé pour d'autres applications.

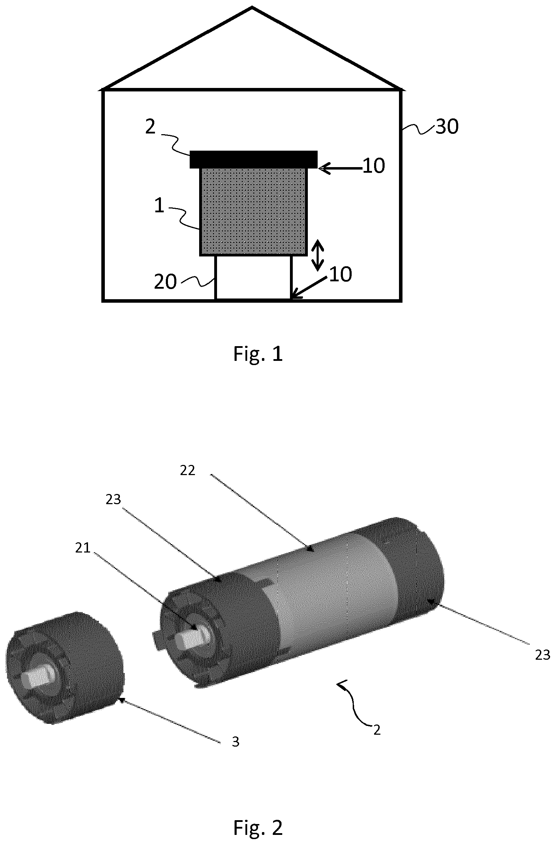

La figure 1 montre une maison 30 qui comprend une ouverture 20. Dans l'exemple de la figure 1, l'ouverture 20 est une porte. Un autre exemple d'ouverture 20 est une fenêtre. Un élément de fermeture 1 permet d'occulter ou de fermer l'ouverture 20. Des exemples d'élément de fermeture 1 sont : un volet, un store, une persienne, une toile. Cet élément de fermeture 1 peut décrire un mouvement de déploiement (ou mouvement de fermeture, d'occultation) permettant de fermer l'ouverture 20. Dans l'exemple montré à la figure 1, cela correspond à un mouvement vers le bas. L'élément de fermeture 1 peut également décrire un mouvement de rétraction (ou mouvement d'ouverture, de dégagement) permettant de dégager ou libérer l'ouverture 20. Dans l'exemple montré à la figure 1, cela correspond à un mouvement vers le haut.

En général, l'élément de fermeture 1 est couplé mécaniquement à un moteur électrique 2 qui peut lui imposer lesdits mouvements de déploiement et de rétraction. Différents types de moteurs 2 électriques peuvent être utilisés. De préférence, la sortie du moteur 2 est couplée à un réducteur (par exemple un réducteur épicycloïdal) qui est lui-même mécaniquement couplé à l'élément de fermeture 1. De préférence, il y a en outre un frein mécanique permettant d'éviter le déploiement de l'élément de fermeture 1 en l'absence d'alimentation du moteur 2.

Un exemple de moteur électrique 2 qui peut être utilisé est un moteur asynchrone tabulaire. Un autre exemple plus récent de moteur électrique 2 qui peut être utilisé est un moteur tubulaire à aimants permanents dit brushless fonctionnant sans balais. Un tel moteur électrique 2 comprend un stator 22 bobiné tandis que des aimants sont placés sur le rotor 21, un système électronique de commande assurant la commutation de courant dans les enroulements statoriques.

Selon une variante préférée, le moteur électrique 2 est un moteur électrique tubulaire à aimants permanents comportant au moins un rotor 21 constitué d'au moins un aimant permanent s'étendant à travers un stator 22 portant une pluralité de bobines 14, ledit stator 22 étant constitué d'une pluralité de couronnes assemblées, chaque couronne comportant un évidement central 16 pour le passage du rotor 21 et une pluralité de dents radiales en forme de T inversé s'étendant vers le centre de ladite couronne, lesdites dents radiales recevant respectivement les bobines 14, le rapport entre la surface des dents et la surface des espaces entre lesdites dents étant compris entre 0.3 et 0.7. Par rapport à d'autres moteurs électriques 2 connus, cette variante préférée présente les avantages suivants : moins encombrant, couple suffisant pour dérouler/enrouler un volet ou store, moins de bruit.

La figure 2 montre schématiquement cette variante préférée du moteur électrique 2 en combinaison avec un réducteur 3. Ce moteur électrique 2 comprend aussi deux flasques 23 de part et d'autre du stator 22.

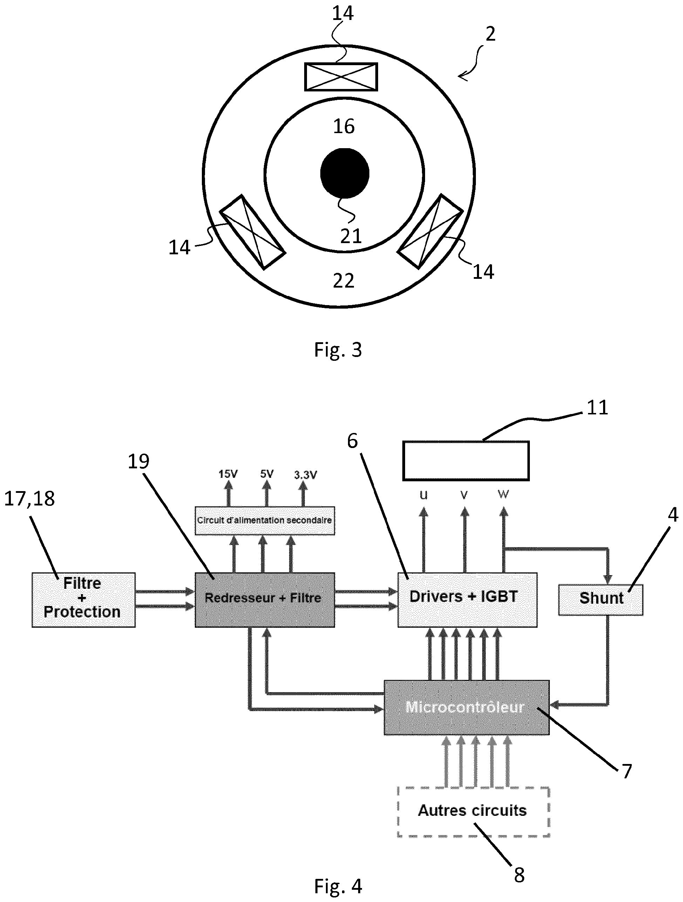

La figure 3 montre une vue en coupe d'un exemple de moteur électrique 2 selon l'invention. Dans cet exemple, le stator 22 comprend trois bobines 14. De préférence, ces trois bobines 14 peuvent être alimentées par des courants déphasés de 120° l'un par rapport à l'autre.

Le système de freinage de l'invention comprend des moyens de commutation 11 couplés aux bobines 14 du stator 22 et des moyens de commande 7 conçus pour (par exemple, programmés pour) commander lesdits moyens de commutation 11 pour mettre en court-circuit chacune de ladite pluralité de bobines 14. De préférence, les moyens de commutation 11 sont électriquement couplés aux bobines 14 du stator 22.

La figure 4 montre un exemple de moyens de commutation 11 et de moyens de commande 7 du système de freinage de l'invention en combinaison avec d'autres éléments qui permettent de contrôler le courant s'écoulant dans les bobines 14 du stator 22.

Différents types de moyens de commutation 11 peuvent être utilisés. Les moyens de commutation 11 peuvent par exemple comprendre un ou plusieurs interrupteurs. Les moyens de commande 7 peuvent par exemple être un microcontrôleur programmés spécifiquement pour contrôler les moyens de commutation 11 de sorte que ces derniers peuvent mettre en court-circuit les bobines 14 du stator 22 quand un signal spécifique est reçu par le microcontrôleur.

Dans l'exemple montré à la figure 4, le moteur électrique 2 peut être alimenté par trois phases différentes (u,v,w). Par exemple le moteur électrique 2 comprend trois bobines 14 (exemple de la figure 3) et chacune peut être alimentée par un courant déphasé de 120° par rapport au courant alimentant une autre bobine 14. Dans ce cas, les moyens de commutation 11 sont aptes à mettre en court-circuit chaque bobine 14 de chaque phase.

En plus des moyens de commutation 11 et des moyens de commande 7 du système de freinage, la figure 4 montre des éléments qui peuvent être utilisés pour contrôler le courant circulant dans les bobines 14. Ces éléments comprennent :
- au moins un filtre de compatibilité électromagnétique dit CEM 17,
- un circuit de correction du facteur de puissance 18,
- un circuit de redressement et de filtrage 19,
- un circuit comportant des transistors bipolaires à grille isolée dits IGBT 6 (terme connu de l'homme du métier) afin de fournir la ou les tensions d'alimentations aux bobines 14,
- un microcontrôleur 7 apte à déterminer et transmettre les signaux de commande au circuit à transistors IGBT 6,
- un ou plusieurs shunts 4 (ou faibles résistances) pour mesurer des courants circulant dans les bobines 14. Ces mesures de courant sont utiles pour assurer le contrôle du moteur électrique 2 au moyen du microcontrôleur 7 ;
- un ou plusieurs autres circuits qui peuvent par exemple être utilisés pour connaître la position angulaire du rotor 21.

Le filtre CEM 17 est de préférence un filtre permettant de réduire voire empêcher des courants induits sur des câbles qui peuvent perturber le fonctionnement des différents éléments. Ce filtre CEM 17 peut par exemple réaliser un filtrage fréquentiel et/ou un filtrage temporel et/ou un écrêtage en tension. D'autres filtres connus de l'homme du métier peuvent être utilisés afin de supprimer les perturbations électromagnétiques en mode conduites et rayonnées. Le circuit correcteur du facteur de puissance 18 permet, de manière usuelle, d'éliminer les déformations du réseau électrique sur le courant absorbé pour éviter l'apparition de courants harmoniques polluant le réseau d'une part, et de mettre le courant et la tension en phase d'autre part. Le circuit de redressement de redressement et de filtrage 19 permet d'assurer la tension du bus continu.

De préférence, le rotor 21 est constitué d'un cylindre en plastoferrite aimanté, emmanché et collé sur un arbre. On entend par plastoferrite un matériau composé de poudre de ferrite mélangée à un liant thermoplastique. Un tel cylindre en plastoferrite peut être obtenu par tout procédé de moulage et/ou d'usinage d'un matériau plastoferrite connu de l'homme du métier. De préférence, la paroi externe du cylindre en plastoferrite comporte au moins un creux et/ou au moins un évidement longitudinal. Le cylindre en plastoferrite pourrait être remplacé par un cylindre en Neoplat ou Feplast. D'autres exemples sont également possibles.

De préférence, le rotor 21 s'étend entre deux paliers non représentés sur les figures 2 et 3.

En plus du système de freinage de l'invention, il est possible de prévoir un autre système de freinage (par exemple un système de freinage magnétique) pour le moteur électrique 2. Par exemple, il est possible d'apposer des aimants permanents supplémentaires sur une partie du rotor 21 qui sont utilisés comme frein magnétique. Ces aimants permanents supplémentaires sont couplés magnétiquement à d'autres aimants permanents présents sur une partie du stator 22. Ce couplage magnétique permettent de fournir un freinage supplémentaire et/ou d'aider à maintenir le rotor 21 à l'arrêt lorsque les bobines 14 ne sont pas alimentées électriquement. Lorsque l'énergie électrique fournie aux bobines 14 est suffisante, le couple moteur du moteur électrique 2 est supérieur au couple de freinage fourni par le système de freinage magnétique, ce qui permet la rotation du rotor 21. Au contraire, lorsque l'énergie électrique fournie aux bobines 14 est insuffisante, le couple moteur est inférieur au couple de freinage magnétique, permettant le ralentissement du rotor 21 lorsque ce dernier tourne. En utilisant en outre le système de freinage selon l'invention, le freinage est d'autant plus efficace.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Système de freinage pour freiner un moteur électrique 2, ledit moteur électrique 2 comprenant un rotor 21 apte à tourner et comprenant un aimant, un stator 22 portant une pluralité de bobines 14, ledit système de freinage comprenant: des moyens de commutation 11 couplés à ladite pluralité de bobines 14 et des moyens de commande 7 conçus pour commander lesdits moyens de commutation 11 pour mettre en court-circuit chacune des bobines de ladite pluralité de bobines 14.

## Revendications

1. Moteur électrique tubulaire comprenant :
- un rotor (21) apte à tourner et comprenant au moins un aimant ;
- un stator (22) portant une pluralité de bobines (14) et présentant un évidement central (16) pour permettre une rotation dudit rotor (21) à l'intérieur dudit stator (22) ;
- un système de freinage dudit moteur électrique,
ce système de freinage comprenant :
- des moyens de commutation (11) couplés à ladite pluralité de bobines (14) et
- des moyens de commande (7) conçus pour commander lesdits moyens de commutation (11) pour mettre en court-circuit chacune des bobines (14) de ladite pluralité de bobines (14) ;
- **caractérisé en ce que** ledit système de freinage comprend en outre des moyens de freinage magnétique constitués d'aimants permanents supplémentaires solidaires d'une partie du rotor (21) et couplés magnétiquement à des aimants permanents solidaires d'une partie du stator (22).

2. Moteur électrique tubulaire selon la revendication précédente **caractérisé en ce que** lesdits moyens de commande (7) comprennent un microcontrôleur.

3. Moteur électrique tubulaire selon l'une quelconque des revendications précédentes **caractérisé en ce que** lesdits moyens de commutation (11) comprennent un interrupteur.

4. Moteur électrique tubulaire selon l'une quelconque des revendications précédentes **caractérisé en ce que** ledit moteur électrique (2) est apte à alimenter des bobines (14) de ladite pluralité de bobines (14) avec des courants déphasés.

5. Moteur électrique tubulaire selon l'une quelconque des revendications 1 à 4 **caractérisé en ce que** le stator (22) comprend trois bobines (14) respectivement alimentées par un courant déphasé de 120° par rapport au courant alimentant une autre bobine (14).

6. Moteur électrique tubulaire selon l'une quelconque des revendications 1 à 5 **caractérisé en ce que** le rotor (21) est constitué d'un cylindre en plastoferrite aimanté, emmanché et collé sur un arbre.

7. Moteur électrique tubulaire selon l'une quelconque des revendications 1 à 6 **caractérisé en ce que** le stator (22) est constitué d'une pluralité de couronnes assemblées, chaque couronne comportant un évidement central (16) pour le passage du rotor (21) et une pluralité de dents radiales en forme de T s'étendant vers le centre de ladite couronne, lesdites dents radiales recevant respectivement les bobines (14).

## Patentansprüche

1. Rohrförmiger Elektromotor, bestehend aus:
- einem Rotor (21), der drehbar ist und mindestens einen Magneten aufweist;
- einem Stator (22), der eine Vielzahl von Spulen (14) enthält und eine zentrale Aussparung (16) aufweist, um eine Drehung des Rotors (21) innerhalb des Stators (22) zu ermöglichen;
- einem Bremssystem für diesen Elektromotor,
wobei dieses Bremssystem umfasst:
- Schaltmittel (11), die mit der Vielzahl von Spulen (14) gekoppelt sind und
- Steuermittel (7), die zur Steuerung der Schaltmittel (11) ausgelegt sind, um jede Spule (14) der Vielzahl von Spulen (14) kurzzuschließen;
- **dadurch gekennzeichnet, dass** das Bremssystem ferner magnetische Bremsmittel umfasst, die aus zusätzlichen Dauermagneten bestehen, die mit einem Teil des Rotors (21) fest verbunden und magnetisch mit Dauermagneten gekoppelt sind, welche mit einem Teil des Stators (22) fest verbunden sind.

2. Rohrförmiger Elektromotor nach dem vorhergehenden Anspruch, **dadurch gekennzeichnet, dass** die Steuermittel (7) einen Mikrocontroller umfassen.

3. Rohrförmiger Elektromotor nach einem der vorhergehenden Ansprüche, **dadurch gekennzeichnet, dass** die Schaltmittel (11) einen Schalter aufweisen.

4. Rohrförmiger Elektromotor nach einem der vorhergehenden Ansprüche, **dadurch gekennzeichnet, dass** der Elektromotor (2) in der Lage ist, Spulen (14) der Vielzahl von Spulen (14) mit phasenverschobenen Strömen zu versorgen.

5. Rohrförmiger Elektromotor nach einem der Ansprüche 1 bis 4, **dadurch gekennzeichnet, dass** der Stator (22) drei Spulen (14) aufweist, die jeweils mit einem Strom gespeist werden, der bezogen auf den Strom, der eine andere Spule (14) speist, um 120° phasenverschoben ist.

6. Rohrförmiger Elektromotor nach einem der Ansprüche 1 bis 5, **dadurch gekennzeichnet, dass** der Rotor (21) aus einem magnetisierten Plastoferrit-Zylinder besteht, der auf eine Welle aufgeschoben und aufgeklebt ist.

7. Rohrförmiger Elektromotor nach einem der Ansprüche 1 bis 6, **dadurch gekennzeichnet, dass** der Stator (22) aus einer Vielzahl von zusammengesetzten Kränzen besteht, wobei jeder Kranz eine zentrale Aussparung (16) für die Durchführung des Rotors (21) und eine Vielzahl von T-förmigen Radialzähnen aufweist, die sich zur Mitte des Kranzes hin erstrecken, wobei die Radialzähne jeweils die Spulen (14) aufnehmen.

## Claims

1. A tubular electric motor comprising:
- a rotor (21) adapted to rotate and comprising at least one magnet;
- a stator (22) bridging a plurality of coils (14) and having a central recess (16) to allow a rotation of said rotor (21) within said stator (22);
- a braking system of said electric motor,
this braking system comprising:
- switching means (11) coupled to said plurality of coils (14) and
- control means (7) adapted to control said switching means (11) to short-circuit each of the coils (14) of said plurality of coils (14);
- **characterized in that** said braking system further comprises magnetic braking means consisting of additional permanent magnets integral with a portion of the rotor (21) and magnetically coupled to permanent magnets integral with a portion of the stator (22).

2. The tubular electric motor according to the preceding claim, **characterized in that** said control means (7) comprise a microcontroller.

3. The tubular electric motor according to any one of the preceding claims **characterized in that** said switching means (11) comprise a switch.

4. The tubular electric motor according to any one of the preceding claims, **characterized in that** said electric motor (2) is adapted to supply coils (14) of said plurality of coils (14) with out-of-phase currents.

5. The tubular electric motor according to any one of claims 1 to 4, **characterized in that** the stator (22) comprises three coils (14) supplied respectively with a 120° out-of-phase current with respect to the current supplying another coil (14).

6. The tubular electric motor according to any one of claims 1 to 5, **characterized in that** the rotor (21) consists of a cylinder made of magnetized plastoferrite, fitted and glued to a shaft.

7. The tubular electric motor according to any one of claims 1 to 6, **characterized in that** the stator (22) consists of a plurality of assembled ring, each ring comprising a central recess (16) for the passage of the rotor (21) and a plurality of T-shaped radial teeth extending towards the centre of said ring, said radial teeth respectively receiving the coils (14).
